# EUROPEAN PATENT SPECIFICATION

(11) **EP 3 543 641 B1**
(45) Date of publication and mention of the grant of the patent: **01.06.2022**
(21) Application number: 19162868.4
(22) Date of filing: 14.03.2019
(51) Int. Cl.: G01B 3/22, G01B 5/12, G01B 5/18

(54) **GAGE AND METHOD FOR DETECTING DIAMETER OF BOLT HOLE BACK SOCKET**
MESSVORRICHTUNG UND VERFAHREN ZUM ERFASSEN DES DURCHMESSERS DER RÜCKWAND EINES BOLZENLOCHS
JAUGE ET MÉTHODE POUR DÉTECTER LE DIAMÈTRE DE LA DOUILLE ARRIÈRE D'UN TROU DE BOULON

(30) Priority: 19.03.2018 CN 201810224845
(43) Date of publication of application: 25.09.2019
(73) Proprietor: CITIC Dicastal Co., Ltd, Qinhuangdao, Hebei 066011 (CN)
(72) Inventor: LIU, Huiying, Qinhuangdao Hebei 066011 (CN); YUAN, Haifeng, Qinhuangdao Hebei 066011 (CN)
(74) Representative: Gerauer, Marc Philippé

(56) References cited:
- CN-U- 202 582 404
- CN-U- 203 837 623
- CN-U- 205 079 718
- JP-A- H07 332 908
- KR-A- 20150 129 382
- US-A- 4 137 640

## Description

### Field of the Invention

The present invention relates to the technical field of measurement, and specifically, to a gage for detecting the diameter of a bolt hole back socket of a wheel.

### Background of the Invention

In the manufacturing process of an aluminum alloy wheel, after a bolt hole is machined from the front, it is also necessary to machine a chamfer or cut a back socket from the flange side. There is a plane diameter requirement for the bolt hole back socket. Currently, the diameter of the bolt hole back socket is generally detected using three-coordinate sampling inspection, which cannot realize high-precision complete detection and brings quality risks to the production. If a vernier caliper is adopted to detect the plane diameter of the bolt hole back socket, not only is the efficiency low, but also the plane edge is hard to find, so the measurement precision is low and whether the plane diameter of the bolt hole back socket is qualified cannot be determined quickly and effectively. Based on the current situation, this patent provides a gage for detecting the diameter of a bolt hole back socket. An operator can use the gage to quickly detect whether the plane diameter of the bolt hole back socket is qualified, so that high-precision complete detection is realized.

KR 20150129382A discloses a height measuring unit for cleaning a collet chuck, wherein a collet chuck support can be moved back and forth and height and dial gauges can be moved together upward and downward. To this end, the height measuring unit for cleaning the collet chuck according to KR 2015 0129382 A relates to an end mill fixated by multiple claws of a collet chuck and comprises: a tetragonal plate-shaped base; a guide which is formed lengthwise and is installed on one upper side of the base; a setting support which slides back and forth along the guide and supports the collet chuck; a post stood on the rear side of the other upper side of the base; the height gauge which includes a scriber protruding toward the guide side, ascends and descends upward and downward along the post, and measures a displacement value of the scriber; and the dial gauge which is mounted on the end of the scriber of the height gauge and measures a displacement value of a measuring unit which ascends by being in contact with the end mill of the collet chuck supported by the setting support.

CN 202582404U provides a wheel jump run-out tolerance detection dual indicator support which comprises a bottom plate, a screw and a dial indicator, wherein the bottom plate is connected with the screw, two header movable bases are arranged on the screw and are respectively connected with an end regulating block and a radial regulating block, one ends of the end regulating block and the radial regulating block are respectively connected with an end header, a radial header and the dial indicator, and a connecting sheet is arranged between the end regulating block and the radial regulating block.

CN 205079718U discloses a drum class part outline geometric tolerances measuring instrument, including positioner, a measuring device, the 2nd measuring device and base, positioner includes the positioning core axle, and the positioning core axle upper segment is equipped with first outer disc, the hypomere is equipped with location terminal surface and the outer disc of second, and the bottom of positioning core axle is the cylindrical section, and location terminal surface equipartition has the index hole, but a measuring device includes vertical fixing on the base and the table skeleton pole of back -and -forth movement to and a plurality of lever dial indicator, lever dial indicator links to each other with the table skeleton pole through first fixed regulation structure, the 2nd measuring device includes the vertical dead lever of fixing on the base, the indexing means on the dead lever and multi freedom table skeleton adjusting device, a measuring device and the 2nd measuring device lie in positioner's both sides respectively.

### Summary of the Invention

The objective of the present invention is to provide a gage for detecting the diameter of a bolt hole back socket. An operator can use the gage to quickly detect whether the plane diameter of the bolt hole back socket is qualified, so that high-precision complete detection is realized. The gage has the characteristics of skillful design, high stability and efficiency, simple operation and the like.

A gage for detecting the diameter of a bolt hole back socket consists of a go side cylinder, a holder I, a digital depth gage I, a screw I, a handle, a no-go side cylinder, a screw II, a holder II and a digital depth gage II.

The go side cylinder is fixed at one end of the handle via the screw I, the diameter of the go side cylinder is equal to the lower deviation of the plane diameter of a bolt hole back socket, and a cylinder through hole is formed on the left side of the go side cylinder. The digital depth gage I is fixed on the go side cylinder via the holder I so that the gage is adapted to determine whether the lower deviation of the plane diameter of the bolt hole back socket is qualified.

The gage is adapted to determine whether the lower deviation of the plane diameter of the bolt hole back socket is qualified as follows: in a first initial state, a lower side of the go side cylinder is placed on the plane of the bolt hole back socket, wherein the top of a probe of the digital depth gage I and the upper surface of the go side cylinder are on one horizontal plane. During a first measurement, the probe of the digital depth gage I can contact the plane of the bolt hole back socket via the cylinder through hole. After the first measurement, the probe automatically rebounds and returns to the first initial state.

The no-go side cylinder is fixed at the other end of the handle via the screw II, the diameter of the no-go side cylinder is equal to the upper deviation of the plane diameter of the bolt hole back socket, and a cylinder through hole is formed on the right side of the no-go side cylinder. The digital depth gage II is fixed on the no-go side cylinder via the holder II so that the gage is adapted to determine whether the upper deviation of the plane diameter of the bolt hole back socket is qualified. The gage is adapted to determine whether the upper deviation of the plane diameter of the bolt hole back socket is qualified as follows: in a second initial state, the top of a probe of the digital depth gage II and the upper surface of the no-go side cylinder are on one horizontal plane. During a second measurement, the probe of the digital depth gage II can contact the plane of the bolt hole back socket via the cylinder through hole. After the second measurement, the probe automatically rebounds and returns to the second initial state.

A method of using the gage for detecting the diameter of a bolt hole back socket is as follows: first, placing, in a first initial state, the front side of a wheel is downward, one side of a flange is upward, an operator holds the handle, a lower side of the go side cylinder on the plane of the bolt hole back socket, wherein a top of a probe of the digital depth gage I and the upper surface of the go side cylinder are on one horizontal plane; pressing, during a first measurement, the probe of the digital depth gage I through the cylinder through hole to contact the plane of the bolt hole back socket via the cylinder through hole, wherein a depth value is determined; determining, at the moment, the depth value is read and compared with the thickness of the go side cylinder, if the depth value is equal to the thickness of the go side cylinder, it indicates that the bottom surface of the go side cylinder is closely attached to the plane of the bolt hole back socket, that is, the lower deviation of the plane diameter of the bolt hole back socket is qualified, and if the depth value is greater than the thickness of the go side cylinder, it indicates that the bottom surface of the go side cylinder is not closely attached to the plane of the bolt hole back socket, that is, the plane diameter of the bolt hole back socket is small and exceeds the lower deviation. Whether the upper deviation of the plane diameter of the bolt hole back socket is qualified is determined similarly: placing, during a second measurement, the operator holds the handle, a lower side of the no-go side cylinder on the plane of the bolt hole back socket, wherein a top of a probe of the digital depth gage II and the upper surface of the no-go side cylinder are on one horizontal plane; pressing, during a second measurement, the probe of the digital depth gage II through the cylinder through hole to contact the plane of the bolt hole back socket via the cylinder through hole, wherein a depth value is determined; determining, at the moment, the depth value is read and compared with the thickness of the no-go side cylinder, if the depth value is equal to the thickness of the no-go side cylinder, it indicates that the bottom surface of the no-go side cylinder is closely attached to the plane of the bolt hole back socket, that is, the plane diameter of the bolt hole back socket is large and exceeds the upper deviation, and if the depth value is greater than the thickness of the no-go side cylinder, it indicates that the bottom surface of the no-go side cylinder is not closely attached to the plane of the bolt hole back socket, that is, the plane diameter of the bolt hole back socket does not exceed the upper deviation and the upper deviation is qualified. The measurement is repeated twice according to this method. When all the results are qualified, it is determined that the plane diameter of the bolt hole back socket is qualified.

The gage of the present invention can meet the detection requirement for the plane diameter of a bolt hole back socket of a wheel. An operator can use the gage to quickly detect whether the plane diameter of the bolt hole back socket is qualified, so that high-precision complete detection is realized. The gage, which converts depth detection into determination on whether the diameter is qualified, has the characteristics of skillful design, high stability and efficiency, simple operation and the like.

### Brief Description of the Drawings

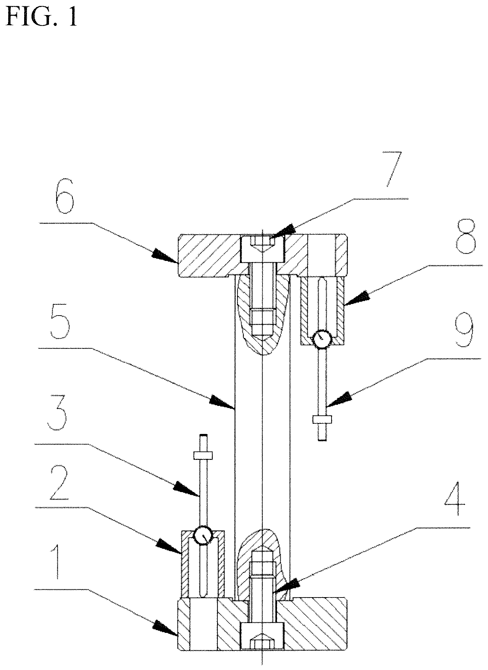

Fig. 1 is a front view of a gage for detecting the diameter of a bolt hole back socket according to the present invention.

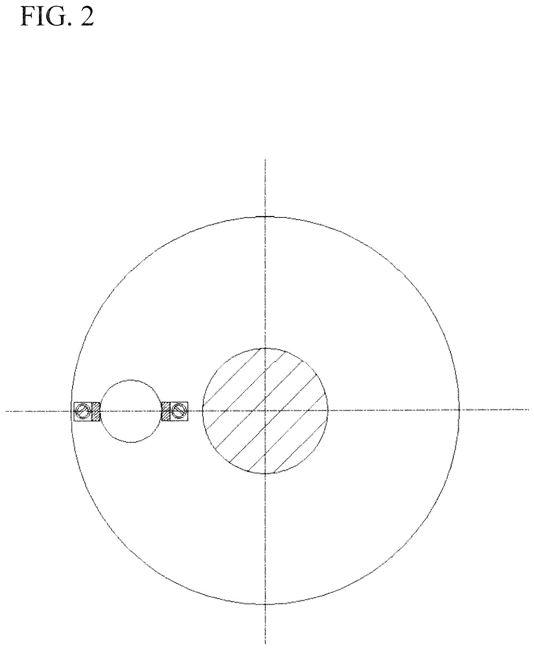

Fig. 2 is a top view of the gage for detecting the diameter of a bolt hole back socket according to the present invention.

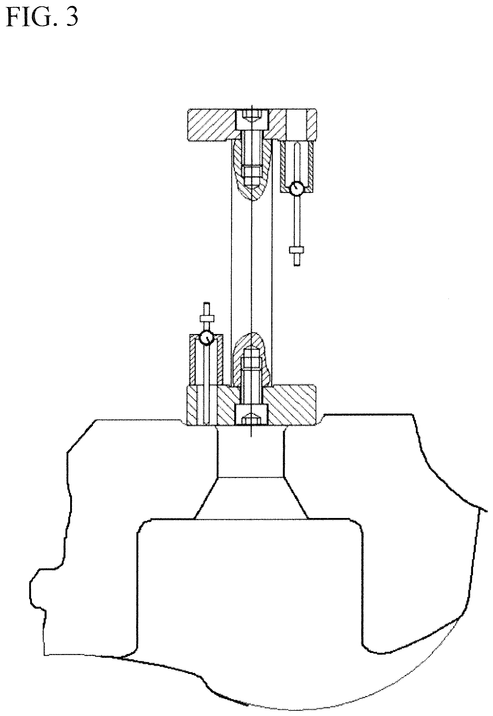

Fig. 3 is a schematic diagram of detection using the gage for detecting the diameter of a bolt hole back socket according to the present invention.

In which, 1-go side cylinder, 2-holder I, 3-digital depth gage I, 4-screw I, 5-handle, 6-no-go side cylinder, 7-screw II, 8-holder II, 9-digital depth gage II.

### Detailed Description of the Embodiments

The details and working conditions of the specific device proposed by the present invention will be described below in combination with the accompanying drawings.

A gage for detecting the diameter of a bolt hole back socket consists of a go side cylinder 1, a holder I 2, a digital depth gage I 3, a screw I 4, a handle 5, a no-go side cylinder 6, a screw II 7, a holder II 8 and a digital depth gage II 9.

The go side cylinder 1 is fixed at one end of the handle 5 via the screw I 4, the diameter of the go side cylinder 1 is equal to the lower deviation of the plane diameter of a bolt hole back socket, and a cylinder through hole is formed on the left side of the go side cylinder 1. The digital depth gage I 3 is fixed on the go side cylinder 1 via the holder I 2. In a first initial state, the top of a probe of the digital depth gage I 3 and the upper surface of the go side cylinder 1 are on one horizontal plane. During a first measurement, the probe of the digital depth gage I 3 can contact the plane of the bolt hole back socket via the cylinder through hole. After the first measurement, the probe automatically rebounds and returns to the first initial state.

The no-go side cylinder 6 is fixed at the other end of the handle 5 via the screw II 7, the diameter of the no-go side cylinder 6 is equal to the upper deviation of the plane diameter of the bolt hole back socket, and a cylinder through hole is formed on the right side of the no-go side cylinder 6. The digital depth gage II 9 is fixed on the no-go side cylinder 6 via the holder II 8. In a second initial state, the top of a probe of the digital depth gage II 9 and the upper surface of the no-go side cylinder 6 are on one horizontal plane. During a second measurement, the probe of the digital depth gage II 9 can contact the plane of the bolt hole back socket via the cylinder through hole. After the second measurement, the probe automatically rebounds and returns to the initial state.

A method of using the gage for detecting the diameter of a bolt hole back socket is as follows: first, placing, in a first initial state, the front side of a wheel is downward, one side of a flange is upward, an operator holds the handle 5, a lower side of the go side cylinder 1 on the plane of the bolt hole back socket, wherein a top of a probe of the digital depth gage I 3 and the upper surface of the go side cylinder are on one horizontal plane; pressing, during a first measurement, the probe of the digital depth gage I 3 through the cylinder through hole to contact the plane of the bolt hole back socket via the cylinder through hole, wherein a depth value is determined; determining, at the moment, the depth value is read and compared with the thickness of the go side cylinder 1, if the depth value is equal to the thickness of the go side cylinder 1, it indicates that the bottom surface of the go side cylinder 1 is closely attached to the plane of the bolt hole back socket, that is, the lower deviation of the plane diameter of the bolt hole back socket is qualified, and if the depth value is greater than the thickness of the go side cylinder 1, it indicates that the bottom surface of the go side cylinder 1 is not closely attached to the plane of the bolt hole back socket, that is, the plane diameter of the bolt hole back socket is small and exceeds the lower deviation. Whether the upper deviation of the plane diameter of the bolt hole back socket is qualified is determined similarly: placing, during a second measurement, the operator holds the handle 5, a lower side of the no-go side cylinder 6 on the plane of the bolt hole back socket, wherein a top of a probe of the digital depth gage II and the upper surface of the no-go side cylinder are on one horizontal plane; pressing, during a second measurement, the probe of the digital depth gage II 9 through the cylinder through hole to contact the plane of the bolt hole back socket via the cylinder through hole, wherein a depth value is determined; determining at the moment, the depth value is read and compared with the thickness of the no-go side cylinder 6, if the depth value is equal to the thickness of the no-go side cylinder 6, it indicates that the bottom surface of the no-go side cylinder 6 is closely attached to the plane of the bolt hole back socket, that is, the plane diameter of the bolt hole back socket is large and exceeds the upper deviation, and if the depth value is greater than the thickness of the no-go side cylinder 6, it indicates that the bottom surface of the no-go side cylinder 6 is not closely attached to the plane of the bolt hole back socket, that is, the plane diameter of the bolt hole back socket does not exceed the upper deviation and the upper deviation is qualified. The measurement is repeated twice according to this method. When all the results are qualified, it is determined that the plane diameter of the bolt hole back socket is qualified.

The gage of the present invention can meet the detection requirement for the plane diameter of a bolt hole back socket of a wheel. An operator can use the gage to quickly detect whether the plane diameter of the bolt hole back socket is qualified, so that high-precision complete detection is realized. The gage, which converts depth detection into determination on whether the diameter is qualified, has the characteristics of skillful design, high stability and efficiency, simple operation and the like.

## Claims

1. A gage for detecting the diameter of a bolt hole back socket, consisting of a go side cylinder (1), a holder I (2), a digital depth gage I (3), a screw I (4), a handle (5), a no-go side cylinder (6), a holder II (8), a digital depth gage II (9) and a screw II (7);
wherein the go side cylinder (1) is fixed at one end of the handle (5) via the screw I (4); the diameter of the go side cylinder (1) is equal to a lower deviation of the plane diameter of a bolt hole back socket; a cylinder through hole is formed on the left side of the go side cylinder (1); the digital depth gage I (3) is fixed on the go side cylinder (1) via the holder I (2) so that the gage is adapted to determine whether the lower deviation of the plane diameter of the bolt hole back socket is qualified,
wherein the no-go side cylinder (6) is fixed at the other end of the handle (5) via the screw II (7), the diameter of the no-go side cylinder (6) is equal to the upper deviation of the plane diameter of the bolt hole back socket, and a cylinder through hole is formed on the right side of the no-go side cylinder (6); the digital depth gage II (9) is fixed on the no-go side cylinder (6) via the holder II (8) so that the gage is adapted to determine whether the upper deviation of the plane diameter of the bolt hole back socket is qualified;
wherein the gage is adapted to determine whether the lower deviation of the plane diameter of the bolt hole back socket is qualified as follows:
in a first initial state, a lower side of the go side cylinder is placed on the plane of the bolt hole back socket, wherein a top of a probe of the digital depth gage I (3) and the upper surface of the go side cylinder (1) are on one horizontal plane; during a first measurement, the probe of the digital depth gage I (3) is pressed through the cylinder through hole to contact the plane of the bolt hole back socket via the cylinder through hole; and after the first measurement, the probe automatically rebounds and returns to the first initial state.

2. The gage for detecting the diameter of a bolt hole back socket according to claim 1, wherein the gage is adapted to determine whether the upper deviation of the plane diameter of the bolt hole back socket is qualified as follows: in a second initial state, the top of a probe of the digital depth gage II (9) and the upper surface of the no-go side cylinder (6) are on one horizontal plane; during a second measurement, the probe of the digital depth gage II (9) can contact the plane of the bolt hole back socket via the cylinder through hole; and after the second measurement, the probe automatically rebounds and returns to the second initial state.

3. Method for detecting the diameter of a bolt hole back socket, comprising:
- providing a gage comprising a go side cylinder (1), a holder I (2), a digital depth gage I (3), a screw I (4), a handle (5), a no-go side cylinder (6), a holder II (8), a digital depth gage II (9) and a screw II (7),
wherein the go side cylinder (1) is fixed at one end of the handle (5) via the screw I (4); the diameter of the go side cylinder (1) is equal to a lower deviation of the plane diameter of a bolt hole back socket; a cylinder through hole is formed on the left side of the go side cylinder (1); and the digital depth gage I (3) is fixed on the go side cylinder (1) via the holder I (2) so that the gage is adapted to determine whether the lower deviation of the plane diameter of the bolt hole back socket is qualified;
wherein the no-go side cylinder (6) is fixed at the other end of the handle (5) via the screw II (7), the diameter of the no-go side cylinder (6) is equal to the upper deviation of the plane diameter of the bolt hole back socket, and a cylinder through hole is formed on the right side of the no-go side cylinder (6); the digital depth gage II (9) is fixed on the no-go side cylinder (6) via the holder II (8); so that the gage is adapted to determine whether the upper deviation of the plane diameter of the bolt hole back socket is qualified;
- placing, in a first initial state, a lower side of the go side cylinder on the plane of the bolt hole back socket, wherein a top of a probe of the digital depth gage I (3) and the upper surface of the go side cylinder (1) are on one horizontal plane;
- pressing, during a first measurement, the probe of the digital depth gage I (3) through the cylinder through hole to contact the plane of the bolt hole back socket via the cylinder through hole, wherein a depth value is determined;
- determining, if the depth value is equal to the thickness of the go side cylinder, that the lower deviation plane diameter of the bolt hole back socket is qualified, and if the depth value is greater than the thickness of the go side cylinder, that the plane diameter of the bolt hole back socket exceeds the lower deviation.

4. Method for detecting the diameter of a bolt hole back socket according to claim 3, further comprising:
- placing, in a second initial state, a lower side of the no-go side cylinder on the plane of the bolt hole back socket, wherein a top of a probe of the digital depth gage II (9) and the upper surface of the no-go side cylinder (1) are on one horizontal plane;
- pressing, during a second measurement, the probe of the digital depth gage II (9) through the cylinder through hole to contact the plane of the bolt hole back socket via the cylinder through hole, wherein a depth value is determined;
- determining, if the depth value is greater than the thickness of the no-go side cylinder, that the upper deviation plane diameter of the bolt hole back socket is qualified, and if the depth value is equal to the thickness of the no-go side cylinder, that the plane diameter of the bolt hole back socket exceeds the upper deviation.

## Patentansprüche

1. Messgerät zum Erfassen des Durchmessers einer Bolzenloch-Rückenbuchse, umfassend einen Startseitenzylinder (1), einen Halter I (2), ein digitales Tiefenmessgerät I (3), eine Schraube I (4), einen Griff (5), einen Sperrseitenzylinder (6), einen Halter II (8), ein digitales Tiefenmessgerät II (9) und eine Schraube II (7);
wobei der Startseitenzylinder (1) über die Schraube I (4) an einem Ende des Griffs (5) befestigt ist; und wobei der Durchmesser des Startseitenzylinders (1) gleich wie eine untere Abweichung des Ebenendurchmessers einer Bolzenloch-Rückenbuchse ist; und wobei ein Zylinderdurchgangsloch auf der linken Seite des Startseitenzylinders (1) gebildet ist; und wobei das digitale Tiefenmessgerät I (3) über den Halter I (2) an dem Startseitenzylinder (1) befestigt ist, so dass das Messgerät angepasst ist, um zu bestimmen, ob die untere Abweichung des Ebenendurchmessers der Bolzenloch-Rückenbuchse qualifiziert ist,
wobei der Sperrseitenzylinder (6) über die Schraube II (7) am anderen Ende des Griffs (5) befestigt ist, und wobei der Durchmesser des Sperrseitenzylinders (6) gleich wie die obere Abweichung des Ebenendurchmessers der Bolzenloch-Rückenbuchse ist, und wobei ein Zylinderdurchgangsloch auf der rechten Seite des Sperrseitenzylinders (6) gebildet ist; und wobei das digitale Tiefenmessgerät II (9) über den Halter II (8) an dem Sperrseitenzylinder (6) befestigt ist, so dass das Messgerät angepasst ist, um zu bestimmen, ob die obere Abweichung des Ebenendurchmessers der Bolzenloch-Rückenbuchse qualifiziert ist;
und wobei das Messgerät wie folgt angepasst ist, um zu bestimmen, ob die untere Abweichung des Ebenendurchmessers der Bolzenloch-Rückenbuchse qualifiziert ist:
in einem ersten Ausgangszustand wird eine untere Seite des Startseitenzylinders an der Ebene der Bolzenloch-Rückenbuchse platziert, wobei eine Spitze einer Sonde des digitalen Tiefenmessgeräts I (3) und die obere Oberfläche des Startseitenzylinders (1) auf einer horizontalen Ebene liegen; wobei während einer ersten Messung die Sonde des digitalen Tiefenmessgeräts I (3) durch das Zylinderdurchgangsloch gedrückt wird, um die Ebene der Bolzenloch-Rückenbuchse über das Zylinderdurchgangsloch zu berühren; und wobei nach der ersten Messung die Sonde automatisch zurückprallt und in den ersten Ausgangszustand zurückkehrt.

2. Messgerät zum Erfassen des Durchmessers einer Bolzenloch-Rückenbuchse nach Anspruch 1, wobei das Messgerät wie folgt angepasst ist, um zu bestimmen, ob die obere Abweichung des Ebenendurchmessers der Bolzenloch-Rückenbuchse qualifiziert ist: in einem zweiten Ausgangszustand liegen die Spitze einer Sonde des digitalen Tiefenmessgeräts II (9) und die obere Oberfläche des Sperrseitenzylinders (6) auf einer horizontalen Ebene; wobei während einer zweiten Messung die Sonde des digitalen Tiefenmessgeräts II (9) über das Zylinderdurchgangsloch die Ebene der Bolzenloch-Rückenbuchse berühren kann; und wobei nach der zweiten Messung die Sonde automatisch zurückprallt und in den zweiten Ausgangszustand zurückkehrt.

3. Verfahren zum Erfassen des Durchmessers einer Bolzenloch-Rückenbuchse, umfassend:
- Bereitstellen eines Messgeräts, umfassend einen Startseitenzylinder (1), einen Halter I (2), ein digitales Tiefenmessgerät I (3), eine Schraube I (4), einen Griff (5), einen Sperrseitenzylinder (6), einen Halter II (8), ein digitales Tiefenmessgerät II (9) und eine Schraube II (7);
wobei der Startseitenzylinder (1) über die Schraube I (4) an einem Ende des Griffs (5) befestigt ist; und wobei der Durchmesser des Startseitenzylinders (1) gleich wie eine untere Abweichung des Ebenendurchmessers einer Bolzenloch-Rückenbuchse ist; und wobei ein Zylinderdurchgangsloch auf der linken Seite des Startseitenzylinders (1) gebildet ist; und wobei das digitale Tiefenmessgerät I (3) über den Halter I (2) an dem Startseitenzylinder (1) befestigt ist, so dass das Messgerät angepasst ist, um zu bestimmen, ob die untere Abweichung des Ebenendurchmessers der Bolzenloch-Rückenbuchse qualifiziert ist,
wobei der Sperrseitenzylinder (6) über die Schraube II (7) am anderen Ende des Griffs (5) befestigt ist, und wobei der Durchmesser des Sperrseitenzylinders (6) gleich wie die obere Abweichung des Ebenendurchmessers der Bolzenloch-Rückenbuchse ist, und wobei ein Zylinderdurchgangsloch auf der rechten Seite des Sperrseitenzylinders (6) gebildet ist; und wobei das digitale Tiefenmessgerät II (9) über den Halter II (8) an dem Sperrseitenzylinder (6) befestigt ist, so dass das Messgerät angepasst ist, um zu bestimmen, ob die obere Abweichung des Ebenendurchmessers der Bolzenloch-Rückenbuchse qualifiziert ist;
- Platzieren einer unteren Seite des Startseitenzylinders auf der Ebene der Bolzenloch-Rückenbuchse in einem ersten Anfangszustand, wobei eine Spitze einer Sonde des digitalen Tiefenmessgeräts I (3) und die obere Oberfläche des Startseitenzylinders (1) auf einer horizontalen Ebene liegen;
- Drücken der Sonde des digitalen Tiefenmessgeräts I (3) durch das Zylinderdurchgangsloch während einer ersten Messung, um die Ebene der Bolzenloch-Rückenbuchse über das Zylinderdurchgangsloch zu berühren, wobei ein Tiefenwert bestimmt wird;
- Bestimmen, dass die untere Abweichung des Ebenendurchmessers der Bolzenloch-Rückenbuchse qualifiziert ist, wenn der Tiefenwert gleich wie die Dicke des Startseitenzylinders ist, und dass der Ebenendurchmesser der Bolzenloch-Rückenbuchse die untere Abweichung überschreitet, wenn der Tiefenwert größer als die Dicke des Startseitenzylinders ist.

4. Verfahren zum Erfassen des Durchmessers einer Bolzenloch-Rückenbuchse nach Anspruch 3, umfassend weiterhin:
- Platzieren einer unteren Seite des Sperrseitenzylinders auf der Ebene der Bolzenloch-Rückenbuchse in einem zweiten Ausgangszustand, wobei eine Spitze einer Sonde des digitalen Tiefenmessgeräts II (9) und die obere Oberfläche des Sperrseitenzylinders (6) auf einer horizontalen Ebene liegen;
- Drücken der Sonde des digitalen Tiefenmessgeräts II (9) durch das Zylinderdurchgangsloch während einer zweiten Messung, um die Ebene der Bolzenloch-Rückenbuchse über das Zylinderdurchgangsloch zu berühren, wobei ein Tiefenwert bestimmt wird;
- Bestimmen, dass die obere Abweichung des Ebenendurchmessers der Bolzenloch-Rückenbuchse qualifiziert ist, wenn der Tiefenwert größer als die Dicke des Sperrseitenzylinders ist, und dass der Ebenendurchmesser der Bolzenloch-Rückenbuchse die obere Abweichung überschreitet, wenn der Tiefenwert gleich wie die Dicke des Sperrseitenzylinders ist.

## Revendications

1. Jauge pour détecter le diamètre d'une douille arrière de trou de boulon, comprenant un cylindre de côté passage (1), un support I (2), une jauge de profondeur numérique I (3), une vis I (4), une poignée (5), un cylindre de côté interdit (6), un support II (8), une jauge de profondeur numérique II (9) et une vis II (7) ;
dans laquelle le cylindre de côté passage (1) est fixé à une extrémité de la poignée (5) par l'intermédiaire de la vis I (4) ; le diamètre du cylindre de côté passage (1) est égal à un écart inférieur du diamètre plan de la douille arrière de trou de boulon ; un trou traversant de cylindre est formé sur le côté gauche du cylindre de côté passage (1) ; et la jauge de profondeur numérique I (3) est fixée au cylindre de côté passage (1) par l'intermédiaire du support I (2) de manière à ce que la jauge soit adaptée à déterminer si l'écart inférieur du diamètre plan de la douille arrière de trou de boulon est conforme,
dans laquelle le cylindre de côté interdit (6) est fixé à l'autre extrémité de la poignée (5) par l'intermédiaire de la vis II (7), le diamètre du cylindre de côté interdit (6) est égal à l'écart supérieur du diamètre plan de la douille arrière de trou de boulon, et un trou traversant de cylindre est formé sur le côté droit du cylindre de côté interdit (6) ; la jauge de profondeur numérique II (9) est fixée au cylindre de côté interdit (6) par l'intermédiaire du support II (8) de manière à ce que la jauge soit adaptée à déterminer si l'écart supérieur du diamètre plan de la douille arrière de trou de boulon est conforme ;
dans laquelle la jauge est adaptée à déterminer si l'écart inférieur du diamètre plan de la douille arrière de trou de boulon est conforme comme suit :
dans un premier état initial, un côté inférieur du cylindre de côté passage est agencé sur le plan de la douille arrière de trou de boulon, un sommet d'une sonde de la jauge de profondeur numérique I (3) et la surface supérieure du cylindre de côté passage (1) se trouvant sur un plan horizontal ; lors d'une première mesure, la sonde de la jauge de profondeur numérique I (3) est pressée à travers le trou traversant de cylindre pour entrer en contact avec le plan de la douille arrière de trou de boulon par l'intermédiaire du trou traversant de cylindre ; et la sonde rebondit automatiquement et revient au premier état initial une fois la première mesure complétée.

2. Jauge pour détecter le diamètre d'une douille arrière de trou de boulon selon la revendication 1, dans laquelle la jauge est adaptée à déterminer si l'écart supérieur du diamètre plan de la douille arrière de trou de boulon est conforme comme suit : dans un second état initial, le sommet d'une sonde de la jauge de profondeur numérique II (9) et la surface supérieure du cylindre de côté interdit (6) se trouvant sur un plan horizontal ; lors d'une seconde mesure, la sonde de la jauge de profondeur numérique II (9) peut entrer en contact avec le plan de la douille arrière de trou de boulon par l'intermédiaire du trou traversant de cylindre ; et la sonde rebondit automatiquement et revient au second état initial une fois la seconde mesure complétée.

3. Procédé pour détecter le diamètre d'une douille arrière de trou de boulon, comprenant :
- fournir une jauge comprenant un cylindre de côté passage (1), un support I (2), une jauge de profondeur numérique I (3), une vis I (4), une poignée (5), un cylindre de côté interdit (6), un support II (8), une jauge de profondeur numérique II (9) et une vis II (7),
dans lequel le cylindre de côté passage (1) est fixé à une extrémité de la poignée (5) par l'intermédiaire de la vis I (4) ; le diamètre du cylindre de côté passage (1) est égal à un écart inférieur du diamètre plan de la douille arrière de trou de boulon ; un trou traversant de cylindre est formé sur le côté gauche du cylindre de côté passage (1) ; et la jauge de profondeur numérique I (3) est fixée au cylindre de côté passage (1) par l'intermédiaire du support I (2) de manière à ce que la jauge soit adaptée à déterminer si l'écart inférieur du diamètre plan de la douille arrière de trou de boulon est conforme ;
dans lequel le cylindre de côté interdit (6) est fixé à l'autre extrémité de la poignée (5) par l'intermédiaire de la vis II (7), le diamètre du cylindre de côté interdit (6) est égal à l'écart supérieur du diamètre plan de la douille arrière de trou de boulon, et un trou traversant de cylindre est formé sur le côté droit du cylindre de côté interdit (6) ; la jauge de profondeur numérique II (9) est fixée au cylindre de côté interdit (6) par l'intermédiaire du support II (8) de manière à ce que la jauge soit adaptée à déterminer si l'écart supérieur du diamètre plan de la douille arrière de trou de boulon est conforme ;
- agencer, dans un premier état initial, un côté inférieur du cylindre de côté passage sur le plan de la douille arrière de trou de boulon, un sommet d'une sonde de la jauge de profondeur numérique I (3) et la surface supérieure du cylindre de côté passage (1) se trouvant sur un plan horizontal ;
- presser, lors d'une première mesure, la sonde de la jauge de profondeur numérique I (3) à travers le trou traversant de cylindre pour entrer en contact avec le plan de la douille arrière de trou de boulon par l'intermédiaire du trou traversant de cylindre, une valeur de la profondeur étant déterminée ;
- déterminer, si la valeur de la profondeur est égale à l'épaisseur du cylindre de côté passage, que l'écart inférieur du diamètre plan de la douille arrière de trou de boulon est conforme, et si la valeur de la profondeur est supérieure à l'épaisseur du cylindre de côté passage, que le diamètre plan de la douille arrière de trou de boulon dépasse l'écart inférieur.

4. Procédé pour détecter le diamètre d'une douille arrière de trou de boulon selon la revendication 3, comprenant en outre :
- agencer, dans un second état initial, un côté inférieur du cylindre de côté interdit sur le plan de la douille arrière de trou de boulon, un sommet d'une sonde de la jauge de profondeur numérique II (9) et la surface supérieure du cylindre de côté interdit (6) se trouvant sur un plan horizontal ;
- presser, lors d'une seconde mesure, la sonde de la jauge de profondeur numérique II (9) à travers le trou traversant de cylindre pour entrer en contact avec le plan de la douille arrière de trou de boulon par l'intermédiaire du trou traversant de cylindre, une valeur de la profondeur étant déterminée ;
- déterminer, si la valeur de la profondeur est supérieure à l'épaisseur du cylindre de côté interdit, que l'écart supérieur du diamètre plan de la douille arrière de trou de boulon est conforme, et si la valeur de la profondeur est égale à l'épaisseur du cylindre de côté interdit, que le diamètre plan de la douille arrière de trou de boulon dépasse l'écart supérieur.
